# EUROPÄISCHE PATENTSCHRIFT

(11) **EP 3 963 229 B1**
(45) Veröffentlichungstag und Bekanntmachung des Hinweises auf die Patenterteilung: **19.07.2023**
(21) Anmeldenummer: 20723812.2
(22) Anmeldetag: 28.04.2020
(51) Int. Cl.: F16D 65/00, F16D 55/2265, B60T 17/22

(54) **BREMSSCHEIBENANORDNUNG MIT EINEM BREMSSTAUBPARTIKELFILTER**
BRAKE DISC ARRANGEMENT HAVING A BRAKE DUST PARTICLE FILTER
AGENCEMENT DE DISQUES DE FREIN DOTÉ D'UN FILTRE À PARTICULES DE POUSSIÈRE DE FREIN

(30) Priorität: 29.04.2019 DE 102019111004
(43) Veröffentlichungstag der Anmeldung: 09.03.2022
(73) Patentinhaber: MANN+HUMMEL GmbH, 71636 Ludwigsburg (DE)
(72) Erfinder: BOCK, Lukas, 74321 Bietigheim-Bissingen (DE); JESSBERGER, Thomas, 71679 Asperg (DE); KÜMMERLING, Volker, 74321 Bietigheim-Bissingen (DE); EVLEKLI, Coskun, 71332 Waiblingen (DE); CORBA, Jan, 93466 Chamerau (DE); WELLER, Benedikt, 71711 Steinheim (DE)
(74) Vertreter: Mann + Hummel Intellectual Property
(86) Internationale Anmeldenummer: PCT/EP2020/061684
(87) Internationale Veröffentlichungsnummer: WO 2020/221713

(56) Entgegenhaltungen:
- DE-A1-102006 051 972
- DE-A1-102010 024 944
- DE-A1-102017 008 421

## Beschreibung

### Technisches Gebiet

Die Erfindung bezieht sich auf eine Bremsscheibenanordnung mit einem Bremsstaubpartikelfilter. Die Erfindung betrifft des Weiteren eine Verwendung eines Bremsstaubpartikelfilters in der Bremsscheibenanordnung und außerdem eine Bremssattelhalter-Bremssattel-Baueinheit für eine Bremsscheibenanordnung.

### Stand der Technik

Aus DE 10 2012 016 835 A1 ist eine Bremsstaubaufnahmevorrichtung für Kraftfahrzeuge bekannt, mit der Bremsenabrieb, welcher bei einem Bremsvorgang durch die Reibung zwischen Bremsscheibe und Bremsbelag entsteht, aufgefangen wird. Der partikelförmige Bremsenabrieb wird in dem durch die rotierende Bremsscheibe verursachten Luftstrom mitgerissen und in einem Bremsstaubpartikelfilter aufgefangen, der ein Filtergehäuse mit einem darin enthaltenen Filtermittel aufweist. Das Filtergehäuse ist am Bremssattel der Scheibenbremse angeordnet und umgreift die Bremsscheibe über ein Winkelsegment, das geringfügig kleiner ist als 180°. Als Filtermittel weist der Bremsstaubpartikelfilter einen Filtermediumkörper auf, der der Form des Filtergehäuses folgend eine U-förmige Querschnittsform aufweist und die Außenkante der Bremsscheibe umgreift. Weitere Bremsanordnungen mit Bremsstaubaufnahmevorrichtungen sind aus den DE102006051972 A1, DE102010024944A1 und DE102017008421A1 ebenfalls bekannt.

### Offenbarung der Erfindung

Der Erfindung liegt die Aufgabe zugrunde, mit einfachen konstruktiven Maßnahmen einen Bremsstaubpartikelfilter sicher an einer Bremsscheibenanordnung zu befestigen.

Diese Aufgabe wird erfindungsgemäß mit den Merkmalen des Anspruches 1 gelöst. Die Unteransprüche geben zweckmäßige Weiterbildungen an.

Der Bremsstaubpartikelfilter, der Bestandteil der Erfindung ist, kann in Kraftfahrzeugen zur Aufnahme von Bremsstaub eingesetzt werden, der bei einer Betätigung der Fahrzeugbremse durch Reibung zwischen Bremsscheibe und Bremsbelag anfällt. Der Bremsstaubpartikelfilter kann somit in PKW, LKW oder Bussen, aber auch in landwirtschaftlichen oder forstwirtschaftlichen Fahrzeugen und darüber hinaus auch in weiteren Fahrzeugen eingesetzt werden. Darüber hinaus kommt auch eine Anwendung bei Schienenfahrzeugen in Betracht. Schließlich ist auch eine Anwendung in stationären Einrichtungen möglich, beispielsweise bei Wellenbremsen in Windkraftanlagen.

Der Bremsstaubpartikelfilter ist im montierten Zustand auf die Bremsscheibe einer Bremsscheibenanordnung aufgesetzt, um den bei einem Bremsvorgang anfallenden Bremsstaub bzw. -abrieb aufzunehmen. Der Bremsstaubpartikelfilter umfasst ein Filtergehäuse sowie einen im Filtergehäuse aufgenommenen Filtermediumkörper, der den Bremsstaub aufnimmt. Als Filtermedium für den Filtermediumkörper wird vorzugsweise ein hochtemperaturbeständiges Material verwendet, das auch bei einer Temperatur von mehr als 600° C stabil ist, um den Temperaturen in unmittelbarer Umgebung der Bremsscheibe zu widerstehen. Das Filtermedium kann ein Metall, Metallfaservlies, Glas, Keramik und/oder einen hochtemperaturbeständigen Kunststoff, insbesondere Polyetheretherketon aufweisen.

Vorteilhafterweise verfügt auch das Filtergehäuse über eine hinreichende Temperaturbeständigkeit und ist zu diesem Zweck beispielhaft aus einem Metallblech, z.B. Stahlblech ausgeführt.

Der Bremsstaubpartikelfilter erstreckt sich über ein begrenztes, definiertes Winkelsegment der Bremsscheibe, beispielsweise über ein Winkelsegment von 180°. Es kommen auch größere oder kleinere Winkelsegmente in Betracht, die jedoch in jedem Fall kleiner als 360° sind. Vorteilhafterweise beträgt der Segmentwinkel, über den sich das Filtergehäuse des Bremsstaubpartikelfilters erstreckt, mindestens 45°, insbesondere mindestens 90°.

Die Bremsscheibenanordnung umfasst in an sich bekannter Weise einen Bremssattel, der an einem Bremssattelhalter aufgenommen ist. Der Bremssattelhalter ist beispielsweise mit einem Radträger fest verbunden. Der Bremssattel ist schwimmend am Bremssattelhalter verbunden, über einen oder mehrere Lagerbolzen, an dem auch das Filtergehäuse des Bremsstaubpartikelfilters gehalten ist. Dem Lagerbolzen kommt somit eine doppelte Funktion zu: Zum einen dient der Lagerbolzen als Verbindung zwischen dem Bremssattel und dem Bremssattelhalter, zum andern ist der Lagerbolzen auch Träger des Filtergehäuses des Bremsstaubfilters. Diese Ausführung hat den Vorteil, dass aufgrund der Anbindung des Bremsstaubpartikelfilters über den oder die Lagerbuchsen des Bremssattels auf weitere Verbindungsmaßnahmen zur Anbindung des Bremsstaubpartikelfilters verzichtet werden kann. Vorteilhaft ist es außerdem, dass der Bremsstaubpartikelfilter im Wesentlichen oder vollständig unabhängig von der Bremsanlage und der Fahrzeuggeometrie angebunden und fixiert werden kann, so dass keine fahrzeugspezifische Ausführung erforderlich ist, sondern lediglich eine Anpassung an die Bremsscheibenanordnung durchgeführt werden muss.

Das Filtergehäuse des Bremsstaubpartikelfilters ist vorzugsweise ausschließlich über einen oder mehrere Lagerbolzen zwischen Bremssattel und Bremssattelhalter befestigt. In bevorzugter Ausführung sind zumindest zwei Lagerbolzen vorgesehen, über die der Bremssattel am Bremssattelhalter aufgenommen ist, wobei alle Lagerbolzen zwischen Bremssattel und Bremssattelhalter auch zur Aufnahme des Filtergehäuses des Bremsstaubpartikelfilters dienen. Darüber hinaus sind keine Verbindungsmaßnahmen zur Verbindung des Bremsstaubpartikelfilters an der Bremsscheibenanordnung erforderlich.

Der Bremssattel ist über den Lagerbolzen schwimmend am Bremssattelhalter gelagert.

Bei schwimmender Lagerung des Bremssattels am Bremssattelhalter ist es vorteilhaft, dass das Filtergehäuse über den Lagerbolzen fest mit dem Bremssattel verbunden ist und somit gemeinsam mit dem Bremssattel schwimmend am Bremssattelhalter gelagert ist. In alternativer Ausführung ist es auch möglich, dass das Filtergehäuse bei schwimmender Lagerung des Bremssattels über den Lagerbolzen fest mit dem Bremssattelhalter verbunden ist.

Gemäß noch einer weiteren vorteilhaften Ausführung ist das Filtergehäuse mit einem Adapterteil verbunden, das am Lagerbolzen gehalten ist. Das Adapterteil ermöglicht eine einfache Verbindung mit dem Filtergehäuse und kann seinerseits mit dem Lagerbolzen verschraubt oder kraft- bzw. formschlüssig mit dem Lagerbolzen verbunden sein. Das Adapterteil ist beispielsweise der Krümmung des Filtergehäuses folgend ringsegmentförmig ausgebildet und liegt an der Innenseite des Filtergehäuses an, so dass sich das Filtergehäuse über einen verhältnismäßig großen Abschnitt am Adapterteil abstützt und entsprechend sicher an dem Adapterteil gehalten ist. Das Adapterteil ist vorteilhafterweise an zumindest zwei Lagerbolzen gehalten, wobei gegebenenfalls zusätzlich auch noch eine direkte Verbindung zwischen dem Adapterteil und insbesondere dem Bremssattel in Betracht kommt.

Das Adapterteil kann an seinen gegenüberliegenden Enden jeweils einen U-förmigen Verbindungsabschnitt aufweisen, wobei die Schenkel der U-Form mit jeweils einem Lagerbolzen verbunden sind. Die U-Form des Verbindungsabschnittes des Adapterteils erlaubt es, den Bremssattel zu übergreifen und eine Verbindung an gegenüberliegenden Enden jedes Lagerbolzens einzugehen. Es kann beispielsweise zweckmäßig sein, in die Schenkel der U-Form jeweils ein Lagerauge einzubringen, mit dem das Adapterteil auf den jeweiligen Lagerbolzen aufgesteckt ist. Vorteilhafterweise ist ein Sicherungselement an den gegenüberliegenden Stirnseiten des Lagerbolzens angeordnet, um das Adapterteil am Lagerbolzen zu sichern.

In einer alternativen Ausführung ohne Adapterteil ist das Filtergehäuse direkt mit dem oder den Lagerbolzen verbunden.

In einer weiteren vorteilhaften Ausführung ist das Filtergehäuse über eine Klemmverbindung mit dem Lagerbolzen verbunden. Die Klemmverbindung ermöglicht eine kraft- und/oder formschlüssige Verbindung des Filtergehäuses mit dem Lagerbolzen. Vorteilhafterweise kann in dieser Ausführung auf ein Adapterteil als Träger des Filtergehäuses verzichtet werden. Stattdessen erfolgt die Verbindung und Halterung des Filtergehäuses mit der Bremsscheibenanordnung mithilfe der Klemmverbindung unmittelbar mit dem Lagerbolzen.

Gemäß einer vorteilhaften Weiterbildung ist die Klemmverbindung von einem oder mehreren Klemmelementen gebildet, die kraft- und/oder formschlüssig mit dem Lagerbolzen verbindbar sind. Die Klemmelemente können einteilig mit dem Filtergehäuse ausgebildet sein. In Betracht kommt beispielsweise eine Ausführung der Klemmelemente als eine Klemmzunge, die bevorzugt aus dem Filtergehäuse ausgestanzt wird. Die Klemmzunge umgreift den Lagerbolzen und stellt auf diese Weise die kraft- und/oder formschlüssige Verbindung mit dem Lagerbolzen her. Durch das Ausstanzen ist in dem Filtergehäuse eine Ausstanzungsöffnung gebildet, in der sich die Klemmzunge in Richtung des Lagerbolzens erstreckt.

Die Klemmzunge kann gebogen ausgeführt sein, um das Umgreifen des Lagerbolzens zu erleichtern. In dem gebogenen Abschnitt der Klemmzunge liegt der Lagerbolzen, wodurch die gewünschte formschlüssige Verbindung gegeben ist. Ggf. handelt es sich zusätzlich auch um eine kraftschlüssige Verbindung, indem der Lagerbolzen mit Reibschluss in dem gebogenen Abschnitt der Klemmzunge liegt.

Gemäß noch einer weiteren vorteilhaften Ausführung erstreckt sich das Filtergehäuse in Umfangsrichtung vollständig über den Bremssattel und überdeckt so den Bremssattel. In alternativer Ausführung hierzu kann es auch ausreichend sein, dass das Filtergehäuse in Umfangsrichtung den Bremssattel nur teilweise überdeckt. Es kann zweckmäßig sein, dass das Filtergehäuse sich über ein größeres Winkelsegment als der Bremssattel erstreckt, so dass das Filtergehäuse über den Bremssattel hinausreicht und einen weiteren Winkelabschnitt abdeckt, der sich insbesondere in Drehrichtung an den Bremssattel anschließt.

Ein weiterer Aspekt der Erfindung bezieht sich auf eine Verwendung eines Bremsstaubpartikelfilters in einer vorbeschriebenen erfindungsgemäßen Bremsscheibenanordnung, wobei das Filtergehäuse des Bremsstaubpartikelfilters über den Lagerbolzen zwischen dem Bremssattelhalter und dem Bremssattel fest mit dem Bremssattel oder dem Bremssattelhalter verbunden wird.

Noch ein weiterer Aspekt der Erfindung bezieht sich auf eine Bremssattelhalter-Bremssattel-Baueinheit für eine Bremsscheibenanordnung, insbesondere für eine vorbeschriebene Bremsscheibenanordnung, wobei der Bremssattel über den Lagerbolzen schwimmend am Bremssattelhalter angeordnet und der Lagerbolzen zugleich Träger des Filtergehäuses des Bremsstaubpartikelfilters ist.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht eine Bremsscheibenanordnung mit einem Bremsstaubpartikelfilter, dessen Filtergehäuse an einem Adapterteil anschraubbar ist, welches an Lagerbolzen zwischen Bremssattel und Bremssattelhalter gehalten ist,
- Fig. 2: eine teilweise geschnittene Seitenansicht der Bremsscheibenanordnung mit Bremsstaubpartikelfilter,
- Fig. 3: eine weitere perspektivische Ansicht der Bremsscheibenanordnung mit dem Bremsstaubpartikelfilter,
- Fig. 4 bis 6: eine Bremsscheibenanordnung mit einem Bremsstaubpartikelfilter in einer weiteren Ausführungsvariante.

In den Figuren sind gleiche Bauteile mit gleichen Bezugszeichen versehen.

### Ausführungsform(en) der Erfindung

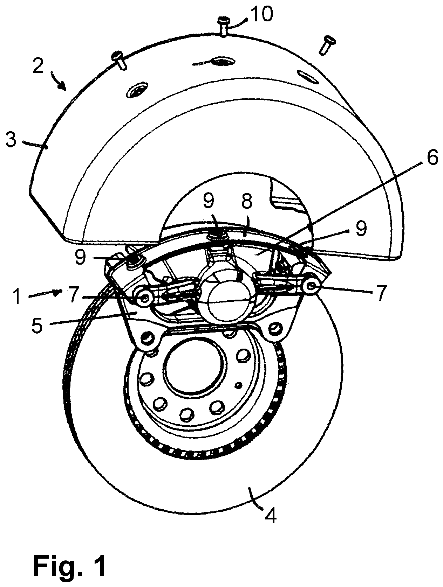

In Figuren 1 bis 3 ist in einer ersten Ausführungsvariante eine Bremsscheibenanordnung 1 dargestellt, die typischerweise in Kraftfahrzeugen verwendet wird. Die Bremsscheibenanordnung 1 ist mit einem Bremsstaubpartikelfilter 2 versehen, der ein Filtergehäuse 3 aufweist, welches auf eine Bremsscheibe 4 der Bremsscheibenanordnung 1 aufsetzbar ist. Das Filtergehäuse 3 nimmt einen Filtermediumkörper auf, in welchem sich Bremsstaub ansammelt, welcher bei einem Bremsvorgang durch Reibung entsteht.

Die Bremsscheibenanordnung 1 umfasst neben der Bremsscheibe 4 einen Bremssattelhalter 5 und einen Bremssattel 6, der Träger von Bremsbelägen ist, welche sich bei einem Bremsvorgang an die Bremsscheibe 4 anlegen. Der Bremssattel 6 ist an dem Bremssattelhalter 5 schwimmend gelagert, welcher beispielsweise an einem Radträger angeordnet ist. Die schwimmende Lagerung des Bremssattels 6 erlaubt eine Relativbewegung des Bremssattels 6 gegenüber dem Bremssattelhalter 5 in Achsrichtung, bezogen auf die Längsachse der Bremsscheibe 4. Die schwimmende Lagerung des Bremssattels 6 wird mithilfe von Lagerbolzen 7 erreicht, welche sich parallel zur Längsachse der Bremsscheibe 4 erstrecken und in zugeordneten Ausnehmungen im Bremssattelhalter 5 aufgenommen sind. Über den Umfang verteilt sind an gegenüberliegenden Enden von Bremssattelhalter 5 und Bremssattel 6 insgesamt zwei Lagerbolzen 7 angeordnet.

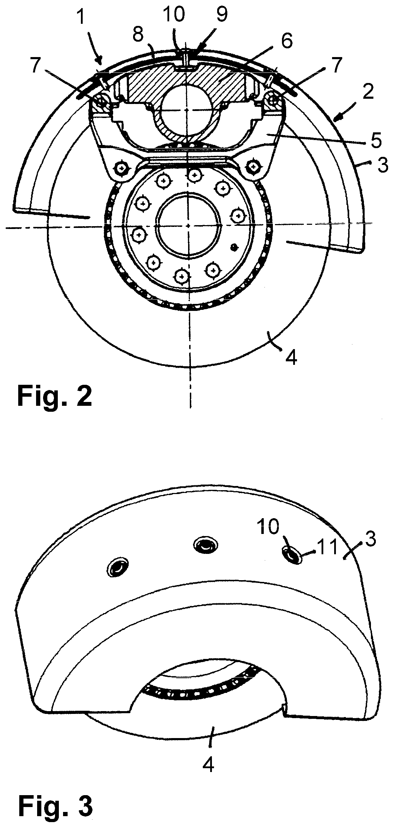

Der Bremsstaubpartikelfilter 2 wird von dem Bremssattel 6 gehalten. Hierzu ist das Filtergehäuse 3 des Bremsstaubpartikelfilters 2 mit einem Adapterteil 8 verschraubt, das am Bremssattel 6 befestigt ist. Das Adapterteil 8 ist ringsegmentförmig ausgebildet und erstreckt sich konzentrisch zur Umfangsseite der Bremsscheibe 4 mit radialem Abstand zu dieser Umfangsseite. Das Adapterteil 8 weist über seine Länge verteilt - bezogen auf die Umfangsrichtung - insgesamt drei Schraubendome 9 auf, in die Schrauben 10 einschraubbar sind, welche durch Öffnungen 11 in der gebogenen Außenwand des Filtergehäuses 3 steckbar sind. Die gebogene Außenwand des Filtergehäuses 3 liegt im montierten Zustand ebenfalls konzentrisch zur Außenkontur der Bremsscheibe 4, so dass auch das gebogene Adapterteil 8 und die Innenseite der Außenwand des Filtergehäuses, an der das Adapterteil 8 anliegt, konzentrisch zueinander verlaufen (Fig. 2), wobei sich die Innenseite der Außenwand vorteilhafterweise am Adapterteil 8 abstützt. Das Filtergehäuse 3 ist über die Verschraubung mit dem Adapterteil 8 fest mit dem Bremssattel 6 verbunden, so dass aufgrund der schwimmenden Lagerung des Bremssattels 6 am Bremssattelhalter 5 auch der Bremsstaubpartikelfilter 2 die schwimmende Bewegung des Bremssattels 6 mit ausführt.

Das Adapterteil 8 erstreckt sich in Umfangsrichtung über die gleiche Länge wie der Bremssattel 6. Das Adapterteil 8 weist an beiden Umfangsenden jeweils einen U-förmigen Verbindungsabschnitt mit seitlich heruntergeklappten Schenkeln auf, in die jeweils ein Lagerauge eingebracht ist, durch das der Lagerbolzen 7 hindurchgeführt ist. Der Lagerbolzen kann einenends mit einem Kopf versehen sein, wobei anderenends ein Sicherungselement am Lagerbolzen angeordnet ist, um den Lagerbolzen in seiner Position zur Sicherung und Halterung von Bremssattel 6 sowie Adapterteil 8 am Bremssattelhalter 5 zu sichern.

Die insgesamt drei Schraubendome 9 am Adapterteil 8 verteilen sich über die Länge des Adapterteils. Die beiden außenliegenden Schraubendome 9 liegen an oder benachbart zum U-förmigen Verbindungsabschnitt am jeweiligen stirnseitigen Ende des Adapterteils 8. Der dritte Schraubendom 9 befindet sich in der Mitte des Adapterteils 8. Unmittelbar unterhalb des mittleren Schraubendoms 9 ist in den Bremssattel 6, wie Fig. 2 zu entnehmen ist, eine Vertiefung eingebracht, die ein hindernisfreies Einschrauben der Schraube 10 in den mittleren Schraubendom 9 ermöglicht, wobei die Spitze der Schraube durch den Schraubendom 9 und das Adapterteil 8 hindurchragt. Die Schraubendome 9 weisen eine radiale Erstreckung auf, wohingegen die Längsachse der Lagerbolzen parallel zur Drehachse der Bremsscheibe 4 verläuft.

Das Filtergehäuse 3 bildet eine segmentförmige Haube, die sich über 180° erstreckt, wobei zwei zueinander parallele Seitenwände an der gebogenen Außenwand angeordnet sind. Insgesamt bildet das Filtergehäuse 3 eine Halbringform, die nach außen und zu den Seiten geschlossen ist, jedoch nach innen offen ausgebildet ist, um ein Aufsetzen auf die Bremsscheibe 4 zu ermöglichen.

Das Filtergehäuse 3 erstreckt sich über ein größeres Winkelsegment als der Bremssattel 6 und umgreift in Umfangsrichtung den Bremssattel 6 vollständig. Wie Fig. 2 zu entnehmen ist, ist das Filtergehäuse 3 um einen kleinen Winkelbetrag von 5° bis 10° gegenüber der Symmetrieachse des Bremssattels 6 verschwenkt angeordnet. Aufgrund dieser asymmetrischen Positionierung des Filtergehäuses 3 in Bezug auf den Bremssattel 6 erstreckt sich das Filtergehäuse 3 mit unterschiedlichen großen Abschnitten links und rechts des Bremssattels 6. Vorteilhafterweise befindet sich der größere Abschnitt des Filtergehäuses 3 auf der bezogen auf die Umlaufrichtung der Bremsscheibe 4 auslaufenden Seite am Bremssattel 6.

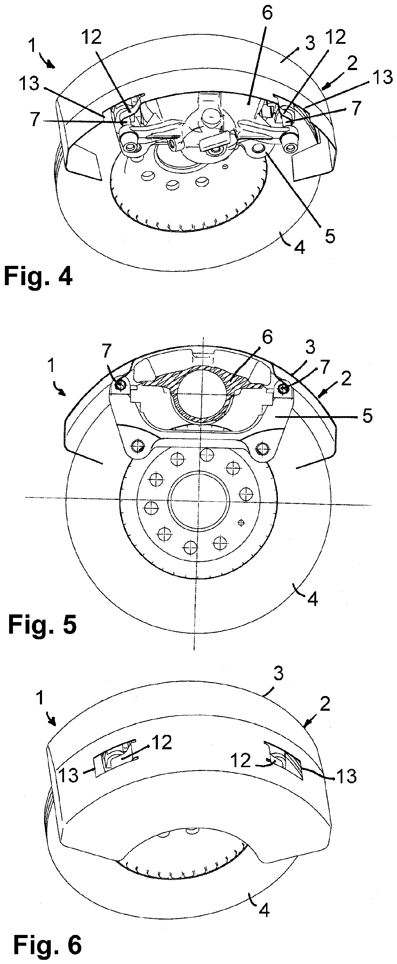

In Figuren 4 bis 6 ist ein weiteres Ausführungsbeispiel einer Bremsscheibenanordnung 1 mit einem Bremsstaubpartikelfilter 2 gezeigt. Der grundsätzliche Aufbau entspricht demjenigen aus dem ersten Ausführungsbeispiel gemäß Figuren 1 bis 3. Beim zweiten Ausführungsbeispiel gemäß Figuren 4 bis 6 wird jedoch auf ein Adapterteil zur Verbindung des Filtergehäuses 3 mit der Bremsscheibenanordnung 1 verzichtet. Stattdessen erfolgt die Verbindung des Filtergehäuses 3 mit der Bremsscheibenanordnung 1 über Klemmzungen 12, die Klemmelemente bilden und am Filtergehäuse 3 angeordnet sind. Die Klemmzungen 12 sind einteilig mit dem Filtergehäuse 3 ausgebildet und werden durch Ausstanzen im ringförmigen Abschnitt des Filtergehäuses 3 hergestellt. Hierdurch entsteht in dem ringförmigen Abschnitt des Filtergehäuses 3 eine Ausstanzungsöffnung 13, in der sich die Klemmzunge 12 radial nach innen in Richtung des Lagerbolzens 7 erstreckt, der von einem gebogenen Abschnitt der Klemmzunge 12 umgriffen wird. Auf diese Weise kann eine form- und kraftschlüssige Verbindung hergestellt werden.

Die gebogenen Abschnitte der Klemmzungen 12 sind voneinander weg gerichtet. Im montierten Zustand wird jeder Lagerbolzen 7 von der Klemmzunge 12 an der in Umfangsrichtung außenliegenden Seite - aus einer mittigen Position zwischen den Lagerbolzen 7 gesehen - umgriffen. Hierdurch ist in Umfangsrichtung eine formschlüssige Sicherung des Filtergehäuses 3 an den Lagerbolzen 7 gewährleistet.

## Patentansprüche

1. Bremsscheibenanordnung mit einem Bremsstaubpartikelfilter (2), mit einer Bremsscheibe (4) und mit einem Bremssattel (6), der über zumindest einen Lagerbolzen (7) an einem Bremssattelhalter (5) aufgenommen ist, wobei der Bremssattel (6) mittels des Lagerbolzens (7) schwimmend am Bremssattelhalter (5) gelagert ist, und wobei der Bremsstaubpartikelfilter (2) ein Filtergehäuse (3) aufweist, **dadurch gekennzeichnet, dass** das Filtergehäuse (3) des Bremsstaubpartikelfilters (2) über den Lagerbolzen (7) fest mit dem Bremssattel (6) oder dem Bremssattelhalter (5) verbunden ist.

2. Bremsscheibenanordnung nach Anspruch 1, **dadurch gekennzeichnet, dass** am Lagerbolzen (7) ein Adapterteil (8) gehalten ist, das Träger des Filtergehäuses (3) ist.

3. Bremsscheibenanordnung nach Anspruch 2, **dadurch gekennzeichnet, dass** das Filtergehäuse (3) mit dem Adapterteil (8) verschraubt ist.

4. Bremsscheibenanordnung nach Anspruch 2 oder 3, **dadurch gekennzeichnet, dass** das Adapterteil (8) an seinen Enden einen U-förmigen oder L-förmigen Verbindungsabschnitt aufweist, wobei die Schenkel des Verbindungsabschnitts jeweils mit dem Lagerbolzen (7) verbunden sind.

5. Bremsscheibenanordnung nach Anspruch 4, **dadurch gekennzeichnet, dass** in die Schenkel des U-förmigen oder L-förmigen Verbindungsabschnitts des Adapterteils (8) Lageraugen zum Aufstecken auf den Lagerbolzen (7) eingebracht sind.

6. Bremsscheibenanordnung nach einem der Ansprüche 2 bis 5, **dadurch gekennzeichnet, dass** das Adapterteil (8) ringsegmentförmig ausgebildet ist.

7. Bremsscheibenanordnung nach einem der Ansprüche 1 bis 5, **dadurch gekennzeichnet, dass** das Filtergehäuse (3) über eine Klemmverbindung (12) mit dem Lagerbolzen (7) verbunden ist.

8. Bremsscheibenanordnung nach Anspruch 7, **dadurch gekennzeichnet, dass** am Filtergehäuse (3) ein oder mehrere die Klemmverbindung bildende Klemmelemente (12) angeordnet sind, die kraft- und/oder formschlüssig mit dem Lagerbolzen (7) verbindbar sind.

9. Bremsscheibenanordnung nach Anspruch 8, **dadurch gekennzeichnet, dass** das Klemmelement (12) als eine Klemmzunge (12) ausgebildet ist, die einteilig mit dem Filtergehäuse (3) ausgebildet ist.

10. Bremsscheibenanordnung nach einem der Ansprüche 1 bis 9, **dadurch gekennzeichnet, dass** das Filtergehäuse (3) den Bremssattel (6) in Umfangsrichtung vollständig überdeckt.

11. Verwendung eines Bremsstaubpartikelfilters (2) für eine Bremsscheibenanordnung, insbesondere in einer Bremsscheibenanordnung (1) nach einem der Ansprüche 1 bis 10, wobei der Bremsstaubpartikelfilter (2) ein Filtergehäuse (3) aufweist, das über den Lagerbolzen (7) zwischen dem Bremssattelhalter (5) und dem Bremssattel (6) fest mit dem Bremssattel (6) oder dem Bremssattelhalter (5) verbunden wird.

12. Bremssattelhalter-Bremssattel-Baueinheit für eine Bremsscheibenanordnung, insbesondere für eine Bremsscheibenanordnung (1) nach einem der Ansprüche 1 bis 10, wobei der Bremssattel (6) über einen Lagerbolzen (7) schwimmend an einem Bremssattelhalter (5) gehalten ist, wobei ein Filtergehäuse (3) eines Bremsstaubpartikelfilters (2) über den Lagerbolzen (7) fest mit dem Bremssattel (6) oder dem Bremssattelhalter (5) verbunden ist.

## Claims

1. Brake disc arrangement having a brake dust particulate filter (2), having a brake disc (4) and having a brake caliper (6) accommodated on a brake caliper holder (5) via at least one bearing bolt (7), wherein the brake caliper (6) is mounted floatingly on the brake caliper holder (5) by means of the bearing bolt (7), and wherein the brake dust particulate filter (2) features a filter housing (3), **characterized in that** the filter housing (3) of the brake dust particulate filter (2) is firmly connected to the brake caliper (6) or to the brake caliper holder (5) via the bearing bolt (7).

2. Brake disc arrangement according to claim 1, **characterized in that** an adapter part (8), which is the carrier of the filter housing (3), is held on the bearing bolt (7).

3. Brake disc arrangement according to claim 2, **characterized in that** the filter housing (3) is screwed to the adapter part (8).

4. Brake disc arrangement according to claim 2 or 3, **characterized in that** the adapter part (8) features a U-shaped or L-shaped connecting section at its ends, wherein the legs of the connecting section are each connected to the bearing bolt (7).

5. Brake disc arrangement according to claim 4, **characterized in that** bearing eyes for fitting onto the bearing bolt (7) are introduced into the legs of the U-shaped or L-shaped connecting section of the adapter part.

6. Brake disc arrangement according to one of the claims 2 to 5, **characterized in that** the adapter part (8) is ring segment-shaped.

7. Brake disc arrangement according to one of the claims 1 to 5, **characterized in that** the filter housing (3) is connected to the bearing bolt (7) via a clamping connection (12).

8. Brake disc arrangement according to claim 7, **characterized in that** one or more clamping elements (12) forming the clamping connection are disposed on the filter housing (3) and which are connectable to the bearing bolt (7) in a non-positive and/or in a positive manner.

9. Brake disc arrangement according to claim 8, **characterized in that** the clamping element (12) is designed as a clamping tongue (12) designed in one piece with the filter housing (3).

10. Brake disc arrangement according to one of the claims 1 to 9, **characterized in that** the filter housing (3) completely covers the brake caliper (6) circumferentially.

11. Use of a brake dust particulate filter (2) for a brake disc arrangement, in particular in a brake disc arrangement (1) according to one of the claims 1 to 10, wherein the brake dust particulate filter (2) features a filter housing (3) firmly connected to the brake caliper (6) or the brake caliper holder via the bearing bolt (7) between the brake caliper holder (5) and the brake caliper (6).

12. Brake caliper holder-brake caliper assembly for a brake disc arrangement, in particular for a brake disc arrangement (1) according to one of the claims 1 to 10, wherein the brake caliper (6) is held in a floating manner on a brake caliper holder (5) via a bearing bolt (7), wherein a filter housing (3) of a brake dust particulate filter (2) is firmly connected to the brake caliper (6) or the brake caliper holder (5) via the bearing bolt (7).

## Revendications

1. Agencement de disque de frein ayant un filtre à particules de poussière de frein (2), ayant un disque de frein (4) et ayant un étrier de frein (6) qui est réceptionné sur un support d'étrier de frein (5) par l'intermédiaire d'au moins un boulon d'appui (7), l'étrier de frein (6) étant monté de manière flottante sur le support d'étrier de frein (5) au moyen du boulon d'appui (7), et le filtre à particules de poussière de frein (2) présentant un boîtier de filtre (3), **caractérisé en ce que** le boîtier de filtre (3) du filtre à particules de poussière de frein (2) est relié de manière fixe à l'étrier de frein (6) ou au support d'étrier de frein (5) par le boulon d'appui (7).

2. Agencement de disque de frein selon la revendication 1, **caractérisé en ce qu'**une pièce d'adaptation (8), qui est le support du boîtier de filtre (3), est maintenue sur le boulon d'appui (7).

3. Agencement de disque de frein selon la revendication 2, **caractérisé en ce que** le boîtier de filtre (3) est vissé à la pièce d'adaptation (8).

4. Agencement de disque de frein selon la revendication 2 ou 3, **caractérisé en ce que** la pièce d'adaptation (8) présente à ses extrémités une section de raccordement en forme de U ou de L, les branches de la section de raccordement étant chacune raccordées au boulon d'appui (7).

5. Agencement de disque de frein selon la revendication 4, **caractérisé en ce que** des oeillets de palier destinés à être enfilés sur le boulon d'appui (7) sont ménagés dans les branches de la section de raccordement en forme de U ou de L de la pièce d'adaptation.

6. Agencement de disque de frein selon l'une quelconque des revendications 2 à 5, **caractérisé en ce que** la pièce d'adaptation (8) est conçue en forme de segment annulaire.

7. Agencement de disque de frein selon l'une quelconque des revendications 1 à 5, **caractérisé en ce que** le boîtier de filtre (3) est raccordé au boulon d'appui (7) par une liaison de serrage (12).

8. Agencement de disque de frein selon la revendication 7, **caractérisé en ce qu'**un ou plusieurs éléments de serrage (12) formant la liaison de serrage sont disposés sur le boîtier de filtre (3) et peuvent être reliés par adhérence et/ou par engagement positif au boulon d'appui (7).

9. Agencement de disque de frein selon la revendication 8, **caractérisé en ce que** l'élément de serrage (12) est conçu en tant que languette de serrage (12) conçue d'un seul tenant avec le boîtier de filtre (3).

10. Agencement de disque de frein selon l'une quelconque des revendications 1 à 9, **caractérisé en ce que** le boîtier de filtre (3) couvre l'étrier de frein (6) complètement en sens circonférentiel.

11. Utilisation d'un filtre à particules de poussière de frein (2) pour un agencement de disque de frein, notamment dans un agencement de disque de frein (1) selon l'une des revendications 1 à 10, le filtre à particules de poussière de frein (2) présentant un boîtier de filtre (3) qui est raccordé de manière fixe à l'étrier de frein (6) ou au support d'étrier de frein par le boulon d'appui (7) entre le support d'étrier de frein (5) et l'étrier de frein (6).

12. Ensemble support d'étrier-étrier de frein pour un agencement de disque de frein, notamment pour un agencement de disque de frein (1) selon l'une quelconque des revendications 1 à 10, l'étrier de frein (6) étant maintenu de manière flottante sur un support d'étrier de frein (5) par l'intermédiaire d'un boulon d'appui (7), un boîtier de filtre (3) d'un filtre à particules de poussière de frein (2) étant relié de manière fixe à l'étrier de frein (6) ou au support d'étrier de frein (5) par l'intermédiaire du boulon d'appui (7).
